# EUROPEAN PATENT APPLICATION

(11) **EP 4 087 288 A1**
(43) Date of publication of application: **09.11.2022**
(21) Application number: 21172112.1
(22) Date of filing: 04.05.2021
(51) Int. Cl.: H04W 4/06, H04W 88/10

(54) **BASE STATION AND METHOD FOR OPERATING A BASE STATION**

(71) Applicant: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Kehl, Ascherl, Liebhoff & Ettmayr Patentanwälte Partnerschaft mbB

(57) **Abstract**

The present disclosure provides base station comprising a data interface configured to communicatively couple to at least one broadcast network configured to provide broadcast load data, and to at least one cellular network; at least one controller being configured to process the load data for transmission and provide a respective processed signal; at least one RF circuit configured to transform the processed signal into a respective analog load data signal; and at least one antenna communicatively coupled to at least one of the at least one RF circuit and configured to emit the respective load data signal; wherein at least one of the at least one controller, the at least one RF circuit, and the at least one antenna processes the broadcast load data. Further, the present invention provides a respective method.

## Description

### TECHNICAL FIELD

The disclosure relates to a base station and a method for operating a base station.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Intemet-of-Things or loT devices.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

Accordingly, it is provided:
A base station comprising a data interface configured to communicatively couple to at least one broadcast network configured to provide broadcast load data to the base station, and to communicatively couple to at least one cellular network; at least one controller communicatively coupled to the data interface and configured to process the broadcast load data for transmission in a respective wireless load data signal and provide a respective processed signal; at least one RF circuit communicatively coupled to at least one of the at least one controller and configured to transform the processed signal into a respective analog load data signal; and at least one antenna communicatively coupled to at least one of the at least one RF circuit and configured to emit the respective load data signal; wherein at least one of the at least one controller, the at least one RF circuit, and the at least one antenna processes the broadcast load data; and wherein at least one antenna is configured to receive cellular device signals.

Further, it is provided:
A method for managing a base station, the method comprising receiving broadcast load data from at least one broadcast network; processing the broadcast load data for transmission in a respective wireless load data signal into a respective processed signal with at least one controller; transforming the processed signal into a respective analog load data signal with at least one RF circuit; and emitting the respective load data signal via at least one antenna; wherein at least one of the at least one controller, the at least one RF circuit, and the at least one antenna processes the broadcast load data; and receiving cellular device signals with at least one antenna.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T, for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, loT devices and the like. Usually, a cellular network is a distributed network comprising "cells", wherein each cell is served by at least one fixed-location transceiver. A site hosting the fixed-location transceivers may also be called a base station site. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between two devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication, video communication, and data communication in a one-way or unidirectional fashion to electronic devices, like radio receivers or TV sets. It is understood, that a broadcast in the context of the present disclosure may be terrestrial broadcast network, a satellite broadcast network or a combination of both.

In the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising at least one of a plurality of radio stations, a plurality television stations, or combined radio and television stations, or satellite stations. The term radio station refers to equipment for transmitting audio and/or data content wirelessly e.g., over the air. The term television station refers to equipment for transmitting audio and/or video and/or data content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is usually larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may rang up to 20 kW. In cellular networks, the transmitting power of the respective transmitters may rang up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN or radio access network in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges that broadcast networks and cellular networks may serve overlapping geographical areas. Consequently, the present disclosure provides a single base station that may be used with broadcast networks and with cellular networks.

The base station according to the present disclosure comprises a data interface that communicatively couples the base station to at least one broadcast network, for example the core network of the broadcast network, configured to provide broadcast load data to the base station, and to communicatively couple to at least one cellular network, for example the core network of the cellular network, configured to provide cellular load data to the base station. The base station according to the present invention may emit load data signals in different types of networks i.e., broadcast networks and cellular networks. At the same time, the base station may also receive device signals from devices in the cellular network, and provide these signals to the cellular network.

It is understood, that the broadcast networks and the cellular networks may be communicatively coupled to the base station via a single network. The base station may therefore be coupled via a single network interface to the broadcast networks and the cellular networks. Communicatively coupled in this context refers to the data interface being capable of communicating with the respective entity, while a direct network connection or indirect network connection e.g., via other networks like the internet, is possible. Further, the data interface may comprise a single hardware interface or multiple hardware interfaces.

In other examples, the cellular networks and the broadcast networks may be separately communicatively coupled to the data interface. The data interface in such an example may communicatively couple to the different operators' networks as required directly or indirectly.

The base station further comprises at least one controller, at least one RF circuit communicatively coupled to at least one of the controllers, and at least one antenna communicatively coupled to at least one of the RF circuits.

The controllers are communicatively coupled to the data interface to process at least one of the broadcast load data and the cellular load data for transmission in a respective wireless load data signal and provide a respective processed signal. The RF circuits transform the received processed signal into a respective analog load data signal, and the antennas emit the respective load data signal wirelessly.

In embodiments, the controllers may also be called baseband processors, and may comprise a CPRI or eCPRI interface for communicating with the RF circuits. The processed signal may for example be provided as I/Q data to the RF circuit. Such I/Q data comprises in-phase and quadrature components for the respective load data signal. The interface between the controllers and the RF circuits may for example comprise an optical-fiber based interface. The controllers of the base station may also be called a baseband processor and may for example comprise a control unit and a data unit. The control unit serves for performing general control and management functions in the base station, while the data unit serves for handling the incoming data and providing the output of the controller.

The RF circuit may comprise respective digital-to-analog converters, filters, mixers and amplifiers for transforming the received digital signal into an analogue signal for transmission by the antennas.

It is understood, that at least some of the components of the base station may also be provided as virtualized components. For example the controllers may be provided in so called virtual machines. This allows operating the controllers at any location that is communicatively coupled to the site where the base station is deployed. Such virtualized controllers may for example be provided in a data center of the operator of the base station and may be communicatively coupled to the RF circuits at the base station site via a respective network connection. It is understood, with the possibility of virtualizing network elements, that an element that is disclosed in the present disclosure as being part of or being comprised by another element or being coupled to or communicatively coupled another element, may be functionally linked to the other element. At the same time such an element may be virtualized and provided at another location but linked via respective data connections to the other element.

The base station according to the present invention comprise a signal path for processing the broadcast load data and a signal path for processing the cellular load data. Each of the signal paths may comprise at least one controller communicatively coupled to at least one RF circuit communicatively coupled to at least one antenna.

Further, at least one controller and/or at least one RF circuit and/or at least one antenna is shared between the signal path for processing the broadcast load data and the signal path for processing the broadcast load data. This means, that the respective element processes load data from both, the broadcast networks and the cellular networks.

In receiving direction, and at least one antenna may receive cellular device signals, and at least one RF circuit may convert the received cellular device signals into digital device signals, and one controller may provide the digital device signals to the cellular network.

The base station according to the present disclosure therefore allows sharing a single site not only between different cellular network operators but also between broadcast network operators and cellular network operators. Consequently the base stations supports the different network operators for example in terms of frequency sharing and site sharing concepts.

The base station consequently helps reducing the footprint by providing a single base station instead of multiple base stations, saves space, therefore, also reduces CAPEX and OPEX and operates more environmentally friendly.

Further embodiments of the present disclosure are subject of the further dependent claims and of the following description, referring to the drawings.

In an embodiment, at least one cellular network may be configured to provide cellular load data to the base station, and at least one controller may process the cellular load data, at least one of the at least one controller, at least one RF circuit, and at least one antenna may process the cellular load data.

It is understood, that the base station may not only serve as a receiving base station for the cellular network but may also emit signals for the cellular network.

In another embodiment, at least one RF circuit may convert the received cellular device signals into digital device signals, and one controller may provide the digital device signals to the cellular network.

Of course the full signal chain from the antenna to digital signals may be provided in the base station also for receiving cellular device signals.

In an embodiment, the base station may comprise at least one controller configured to process the broadcast load data for transmission to broadcast receiving devices and the cellular load data for transmission to cellular receiving devices. In addition or as alternative, the base station may comprise at least two controllers, each configured to process either the broadcast load data for transmission to broadcast receiving devices or the cellular load data for transmission to cellular receiving devices.

The controllers of the base station may be shared controllers that operate on the cellular load data and the broadcast load data for transmission of the respective load data in the respective network. In addition or as alternative, controllers may be provided that only process either the cellular load data or the broadcast load data.

In the shared base station according to the present disclosure, the cellular load data will consequently be transmitted in a cellular network to cellular receiving devices, like for example smartphones, or the like. The broadcast load data will in contrast be transmitted in a broadcast network to broadcast receiving devices, like for example TV sets, radios, or the like. It is understood, that receiving devices may also be configured to receive signals in a cellular network and a broadcast network.

In a further embodiment, the base station may comprise at least one antenna, wherein the load data signal that is based on the broadcast load data and the load data signal that is based on the cellular load data may be transmitted via the at least one antenna.

The antennas of the base station may be provided as antennas with a single antenna element each. As alternative, the antennas may each comprise an array antenna with multiple antenna elements each.

In this embodiment, the antennas all transmit the load data signals based on the broadcast load data and the cellular load data. Therefore, no dedicated antennas need to be provided in the base station for the broadcast networks and the cellular networks.

To accommodate transmission of the signals for both types of networks, the broadcast networks and the cellular networks, the antennas may XXXX

In yet another embodiment, the base station may comprise at least two antennas wherein the load data signal that is based on the broadcast load data and the load data signal that is based on the cellular load data may be transmitted via different ones of the antennas.

Also in an embodiment that uses different antennas for the load data signals in the different networks, the antennas of the base station may be provided as antennas with a single antenna element each or as array antennas with multiple antenna elements each.

In this embodiment, dedicated antennas are provided for each type of network i.e., for the broadcast networks and for the cellular networks.

Using dedicated antennas for each type of network allows using antennas that are specifically designed to operate in the respective type of network. The antenna structure may therefore be simplified in contrast to multi-network antennas.

In another embodiment, wherein at least one of the antennas may transmit the load data signal that is based on the broadcast load data and the load data signal that is based on the cellular load data.

If dedicated antennas are provided for the single types of networks i.e., the broadcast networks and the cellular networks, still some of the antennas may be shared antennas that operate in both types of networks.

This allows flexibly configuring the antennas of the base station according to the needs at the respective site.

In an embodiment, the at least one antenna may comprise configurable antenna characteristics, especially a configurable steering angle.

The antennas of the base station may comprise at least some configurable antenna characteristics. Such antennas may also be called smart antennas. In case that the configurable antenna characteristic is the steering angle of the antenna, such an antenna may also be called a beamforming antenna or phased array antenna.

The term steering angle in this regard refers to the angle of the main beam of the antenna, in sending and receiving direction, with regard to boresight of the antenna.

In a further embodiment, the at least one antenna may be configured to at least one of emit and receive signals in at least one of an operation frequency range of the broadcast networks and an operation frequency range of the cellular networks. The operation frequency range of the broadcast networks may comprise at least one of 54 MHz to 88 MHz, and 76 MHz to 108 MHz, and 174 MHz to 216 MHz, and 806 MHz to 6000 MHz. The operation frequency range of the cellular networks comprises 806 MHz to 6000 MHz.

The antennas of the base station may be adapted to operate in the frequency ranges that are usually used in broadcast networks and cellular networks.

It is understood, that the antennas may also be designed to operate in any other frequency band that may for example be used for broadcast networks or cellular networks in future communication standards or according to changed regulations.

In yet another embodiment, the data interface may be communicatively coupled to at least one of a core network of the at least one broadcast network and a core network of the at least one broadcast network. The at least one controller may be configured to receive at least one of control data for controlling the base station and metadata regarding the respective load data from at least one of the core networks..

The controllers in the base station may receive control data not only from a single core network, but from the core networks of two different types of core networks, the core networks of broadcast networks and the core networks of cellular networks.

This allows the controllers to flexibly operate in different networks and support operation of the base station in these different networks.

The metadata may refer to the respective load data and may indicate details of how the respective load data is to be transmitted in the respective network.

In another embodiment, the base station according may comprise an encryptor communicatively coupled to the at least one controller and configured to encrypt the broadcast load data and the cellular load data, especially with at least one of the same type of encryption, the same strength of encryption, and the same encryption parameters.

Providing a common encryption allows reusing the encryptor for the load data in both types of networks, the broadcast networks and the cellular networks.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a base station according to the present disclosure with a cellular network and a broadcast network;
Figure 2 shows a block diagram of another embodiment of a base station according to the present disclosure with a cellular network and a broadcast network; and
Figure 3 shows a flow diagram of an embodiment of a method according to the present disclosure.

In the figures like reference signs denote like elements unless stated otherwise.

### DETAILED DESCRIPTION OF THE DRAWINGS

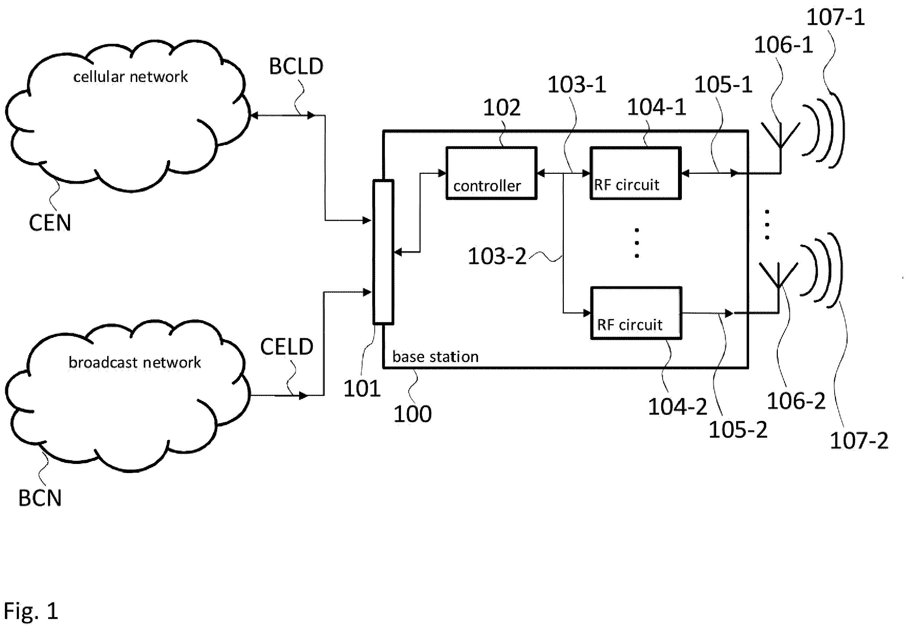

Figure 1 shows a block diagram of a base station 100. The base station 100 comprises a data interface 101 that is internally communicatively coupled to a controller 102. The controller 102 is communicatively coupled to a plurality of RF circuits 104-1, 104-2, that are each communicatively coupled to an antenna 106-1, 106-2. Externally, the data interface 101 is communicatively coupled to a cellular network CEN and to a broadcast network BCN.

The data interface 101 communicatively couples to the broadcast network BCN and the cellular network CEN, and receives broadcast load data BCLD and cellular load data CELD. The data interface 101 may also provide device data to the broadcast network BCN from devices that operate in the broadcast network.

The controller 102 processes the broadcast load data BCLD and the cellular load data CELD for transmission in a respective wireless load data signal 107-1, 107-2 and provide a respective processed signal 103-1, 103-2 to the RF circuits 104-1, 104-2. The RF circuits 104-1, 104-2 transform the processed signal 103-1, 103-2 into a respective analog load data signal 105-1, 105-2 and provide the analog load data signal 105-1, 105-2 to the respective one of the antennas 106-1, 106-2 that emit the respective wireless load data signal 107-1, 107-2.

In addition, the antenna 106-1 may also receive device signals from devices in the cellular network CEN and provide the respective device signals to the RF circuit 104-1. The RF circuit 104-1 provides respective digital signals to the controller 102, and the controller 102 provides the processed signals to the cellular network CEN.

The base station 100 comprises one controller 102 that processes the signals for the cellular network CEN and the broadcast network BCN. Further, dedicated RF circuits 104-1, 104-2 and antennas 106-1, 106-2 are provided for the two networks.

In embodiments, the base station 100 for the cellular network CEN may be a receiving base station 100 only and not process load data from the cellular network CEN.

It is understood, that in other embodiments the base station 100 may comprise multiple controllers, for example one controller for the broadcast network BCN and one controller for the cellular network CEN.

Further, other elements may be shared for the load data of the cellular network CEN and the load data of the broadcast network BCN. For example, a common RF circuit or common antennas may be provided.

It is understood, that although only one controller 102, and two RF circuits 104-1, 104-2 with two antennas 106-1, 106-2 are shown, any number of these elements may be provided in the base station 100 as required. Further, the elements shared by the signal paths may not only comprise the controller 102, but may also comprise RF circuits and antennas.

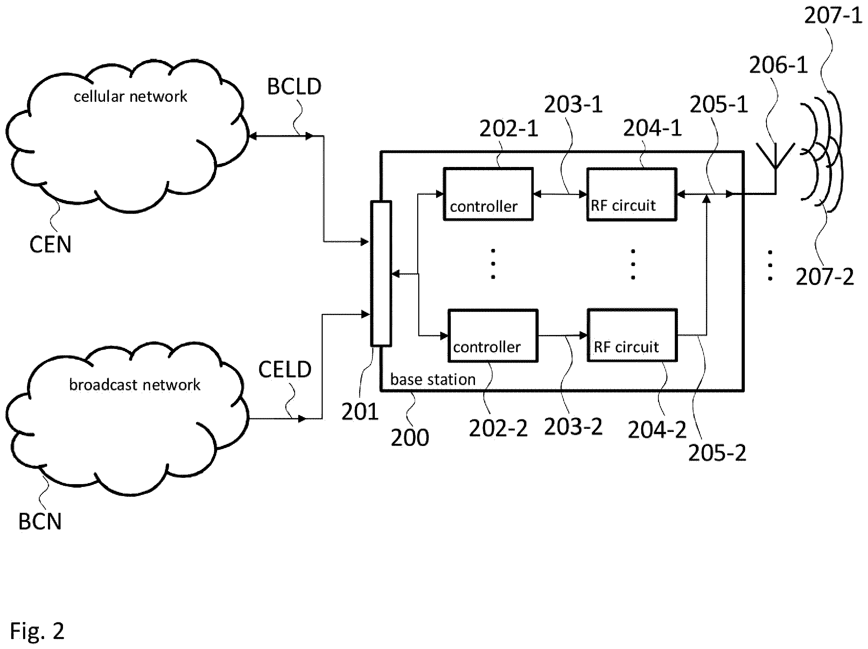

Figure 2 shows a block diagram of another base station 200. The base station 200 is based on the base station 100. The base station 200 therefore comprises a data interface 201 that is internally communicatively coupled to a first controller 202-1. The first controller 202-1 is communicatively coupled to RF circuit 204-1, that is communicatively coupled to antenna 206-1. Externally, the data interface 201 is communicatively coupled to a cellular network CEN and to a broadcast network BCN.

The base station 200 further comprises a second controller 202-2 that is communicatively coupled to a RF circuit 204-2. The RF circuit 204-2 is communicatively coupled to the same antenna 206-1 as the RF circuit 204-1.

In contrast to the base station 100, in the base station 200 the two signal paths for the cellular network CEN and the broadcast network BCN share only the antenna 206-1.

It is understood, that although in the base station 200 two controllers 202-1, 202-2 are shown, more controllers are possible. Further, the signal paths may not only share the antenna 206-1, but also any other element, like a RF circuit.

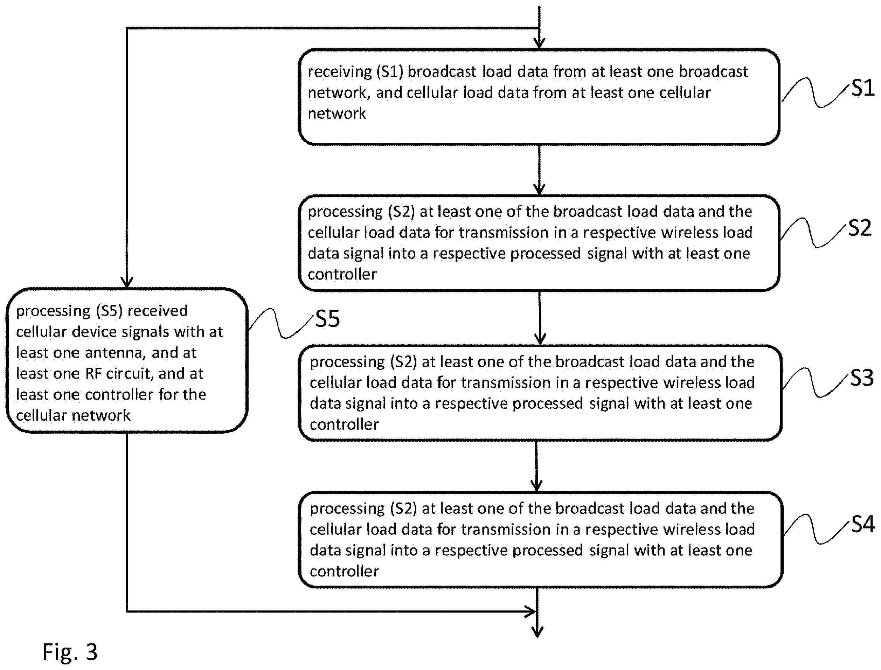

For sake of clarity in the following description of the method-based Fig. 3 the reference signs used above in the description of apparatus based Figs. 1 - 2 will be maintained.

Figure 3 shows a flow diagram a method for managing a base station. The method comprises receiving S1 broadcast load data BCLD from at least one broadcast network BCN. Further, the method comprises processing S2 the broadcast load data BCLD D for transmission in a respective wireless load data signal 107-1, 107-2, 207-1, 207-2 into a respective processed signal 103-1, 103-2, 203-1, 203-2 with at least one controller 102, 202. The method also comprises transforming S3 the processed signal 103-1, 103-2, 203-1, 203-2 into a respective analog load data signal 105-1, 105-2, 205-1, 205-2 with at least one RF circuit 104-1, 104-2, 204-1, 204-2, and emitting S4 the respective wireless load data signal 107-1, 107-2, 207-1, 207-2 via at least one antenna 106-1, 106-2, 206-1.

The method also comprises processing S5 received cellular device signals with at least one antenna 106-1, 106-2, 206-1, and at least one RF circuit 104-1, 104-2, 204-1, 204-2, and at least one controller 102, 202 for the cellular network CEN.

At least one of the at least one controller 102, 202, the at least one RF circuit 104-1, 104-2, 204-1, 204-2, and the at least one antenna 106-1, 106-2, 206-1 may also processes cellular load data CELD received from the cellular network together with the broadcast load data BCLD, i.e. signals originating in both the broadcast network BCN and the cellular network CEN.

The broadcast load data BCLD for transmission to broadcast receiving devices and the cellular load data CELD for transmission to cellular receiving devices may be both processed in respective controllers 102, 202 together. Alternatively, the broadcast load data BCLD for transmission to broadcast receiving devices or the cellular load data CELD for transmission to cellular receiving devices may be processed by different ones of the controllers 102, 202.

Further, the analog load data signal 105-1, 105-2, 205-1, 205-2 that is based on the broadcast load data BCLD and the analog load data signal 105-1, 105-2, 205-1, 205-2 that is based on the cellular load data CELD may be transmitted via the at least one common antenna 106-1, 106-2, 206-1. This means, that a single antenna 106-1, 106-2 or group of antennas 106-1, 106-2 emit both wireless load data signals 107-1, 107-2.

In an alternative, the analog load data signal 105-1, 105-2, 205-1, 205-2 that is based on the broadcast load data BCLD and the analog load data signal 105-1, 105-2, 205-1, 205-2 that is based on the cellular load data CELD are transmitted via at least two different ones of the antennas 106-1, 106-2, 206-1. In this example, at least one antenna 106-1, 106-2 is provided that only emits one of the wireless load data signal 107-1, 107-2. However, at least one of the antennas 106-1, 106-2, 206-1 may also transmit the analog load data signal 105-1, 105-2, 205-1, 205-2 that is based on the broadcast load data BCLD and the load data signal that is based on the cellular load data CELD.

The method may also comprise configuring at least one configurable antenna characteristic of the at least one antenna 106-1, 106-2, 206-1, like for example a configurable steering angle.

Signals may be emitted and/or received by the antennas 106-1, 106-2, 206-1 in at least one of an operation frequency range of the broadcast networks BCN and an operation frequency range of the cellular networks CEN. The operation frequency range of the broadcast networks BCN may for example comprise at least one of 54 MHz to 88 MHz, and 76 MHz to 108 MHz, and 174 MHz to 216 MHz, and 806 MHz to 6000 MHz. The operation frequency range of the cellular networks CEN may comprise 806 MHz to 6000 MHz.

The method may also comprise receiving control data for controlling the base station 100, 200 and metadata regarding the respective load data from a core network of the broadcast network BCN and a core network of the cellular network CEN. The control data allows controlling the base station 100, 200 from the broadcast network BCN and the cellular network CEN. The metadata allows determining certain parameters for how to emit the wireless load data signal 107-1, 107-2.

Further, the method may comprise encrypting the broadcast load data BCLD and the cellular load data CELD, especially with at least one of the same type of encryption, the same strength of encryption, and the same encryption parameters.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS

- 100,200: base station
- 101, 201: data interface
- 102,202: controller
- 103-1, 103-2, 203-1, 203-2: processed signal
- 104-1, 104-2, 204-1, 204-2: RF circuit
- 105-1, 105-2, 205-1, 205-2: analog load data signal
- 106-1, 106-2, 206-1: antenna
- 107-1, 107-2, 207-1, 207-2: wireless load data signal

- BCN: broadcast network
- BCLD: broadcast load data
- CEN: cellular network
- CELD: cellular load data

- S1, S2, S3, S4, S5: method step

## Claims

1. Base station (100, 200) comprising:
a data interface (101, 201) configured to communicatively couple to at least one broadcast network (BCN) configured to provide broadcast load data (BCLD) to the base station (100, 200), and to communicatively couple to at least one cellular network (CEN);
at least one controller (102, 202) communicatively coupled to the data interface (101, 201) and configured to process the broadcast load data (BCLD) for transmission in a respective wireless load data signal (107-1, 107-2, 207-1, 207-2) and provide a respective processed signal (103-1, 103-2, 203-1, 203-2);
at least one RF circuit (104-1, 104-2, 204-1, 204-2) communicatively coupled to at least one of the at least one controller (102, 202) and configured to transform the processed signal (103-1, 103-2, 203-1, 203-2) into a respective analog load data signal (105-1, 105-2, 205-1, 205-2); and
at least one antenna (106-1, 106-2, 206-1) communicatively coupled to at least one of the at least one RF circuit (104-1, 104-2, 204-1, 204-2) and configured to emit the respective wireless load data signal (107-1, 107-2, 207-1, 207-2);
wherein at least one of the at least one controller (102, 202), the at least one RF circuit (104-1, 104-2, 204-1, 204-2), and the at least one antenna (106-1, 106-2, 206-1) processes the broadcast load data (BCLD);
and wherein at least one antenna (106-1, 106-2, 206-1) is configured to receive cellular device signals.

2. Base station (100, 200) according to claim 1, wherein at least one cellular network (CEN) is configured to provide cellular load data (CELD) to the base station (100, 200), and wherein at least one controller (102, 202) is configured to process the cellular load data (CELD), and wherein at least one of the at least one controller (102, 202), at least one RF circuit (104-1, 104-2, 204-1, 204-2), and at least one antenna (106-1, 106-2, 206-1) processes the cellular load data (CELD); and/or
wherein at least one RF circuit (104-1, 104-2, 204-1, 204-2) is configured to convert the received cellular device signals into digital device signals, and one controller (102, 202) is configured to provide the digital device signals to the cellular network (CEN); and/or
comprising at least one controller (102, 202) configured to process the broadcast load data (BCLD) for transmission to broadcast receiving devices and the cellular load data (CELD) for transmission to cellular receiving devices; and/or
comprising at least two controllers (102, 202), each configured to process either the broadcast load data (BCLD) for transmission to broadcast receiving devices or the cellular load data (CELD) for transmission to cellular receiving devices.

3. Base station (100, 200) according to any one of the preceding claims, comprising at least one antenna (106-1, 106-2, 206-1), wherein the analog load data signal (105-1, 105-2, 205-1, 205-2) that is based on the broadcast load data (BCLD) and the analog load data signal (105-1, 105-2, 205-1, 205-2) that is based on the cellular load data (CELD) is transmitted via the at least one antenna (106-1, 106-2, 206-1).

4. Base station (100, 200) according to any one of the preceding claims, comprising at least two antennas (106-1, 106-2, 206-1) wherein the analog load data signal (105-1, 105-2, 205-1, 205-2) that is based on the broadcast load data (BCLD) and the analog load data signal (105-1, 105-2, 205-1, 205-2) that is based on the cellular load data (CELD) are transmitted via different ones of the antennas (106-1, 106-2, 206-1).

5. Base station (100, 200) according to claim 3, wherein at least one of the antennas (106-1, 106-2, 206-1) transmits the analog load data signal (105-1, 105-2, 205-1, 205-2) that is based on the broadcast load data (BCLD) and the analog load data signal (105-1, 105-2, 205-1, 205-2) that is based on the cellular load data (CELD).

6. Base station (100, 200) according to any one of the preceding claims, wherein the at least one antenna (106-1, 106-2, 206-1) comprises at least one configurable antenna characteristic, especially a configurable steering angle.

7. Base station (100, 200) according to any one of the preceding claims, wherein the at least one antenna (106-1, 106-2, 206-1) is configured to at least one of emit and receive signals in at least one of an operation frequency range of the broadcast networks (BCN) and an operation frequency range of the cellular networks (CEN);
wherein the operation frequency range of the broadcast networks (BCN) comprises at least one of 54 MHz to 88 MHz, and 76 MHz to 108 MHz, and 174 MHz to 216 MHz, and 806 MHz to 6000 MHz; and
wherein the operation frequency range of the cellular networks (CEN) comprises 806 MHz to 6000 MHz.

8. Base station (100, 200) according to any one of the preceding claims, wherein the data interface (101, 201) is communicatively coupled to at least one of a core network of the at least one broadcast network (BCN) and a core network of the at least one cellular network (CEN); and
wherein the at least one controller (102, 202) is configured to receive at least one of control data for controlling the base station (100, 200) and metadata regarding the respective load data from at least one of the core networks.

9. Base station (100, 200) according to any one of the preceding claims, comprising an encryptor communicatively coupled to the at least one controller (102, 202) and configured to encrypt the broadcast load data (BCLD) and the cellular load data (CELD), especially with at least one of the same type of encryption, the same strength of encryption, and the same encryption parameters.

10. Method for managing a base station (100, 200), the method comprising:
receiving (S1) broadcast load data (BCLD) from at least one broadcast network (BCN);
processing (S2) the broadcast load data (BCLD) for transmission in a respective wireless load data signal (107-1, 107-2, 207-1, 207-2) into a respective processed signal (103-1, 103-2, 203-1, 203-2) with at least one controller (102, 202);
transforming (S3) the processed signal (103-1, 103-2, 203-1, 203-2) into a respective analog load data signal (105-1, 105-2, 205-1, 205-2) with at least one RF circuit (104-1, 104-2, 204-1, 204-2); and
emitting (S4) the respective wireless load data signal (107-1, 107-2, 207-1, 207-2) via at least one antenna (106-1, 106-2, 206-1);
wherein at least one of the at least one controller (102, 202), the at least one RF circuit (104-1, 104-2, 204-1, 204-2), and the at least one antenna (106-1, 106-2, 206-1) processes the broadcast load data (BCLD); and
receiving (S5) cellular device signals with at least one antenna (106-1, 106-2, 206-1) for the cellular network (CEN).

11. Method according to claim 10, wherein receiving (S1) comprises receiving cellular load data (CELD) from at least one cellular network (CEN), and processing (S2) comprises processing the cellular load data (CELD) for transmission in a respective wireless load data signal (107-1, 107-2, 207-1, 207-2); and/or
wherein the received cellular device signals are processed with at least one RF circuit (104-1, 104-2, 204-1, 204-2), and at least one controller (102, 202); and/or
wherein the broadcast load data (BCLD) for transmission to broadcast receiving devices and the cellular load data (CELD) for transmission to cellular receiving devices is processed by at least one controller (102, 202); and/or
wherein either the broadcast load data (BCLD) for transmission to broadcast receiving devices or the cellular load data (CELD) for transmission to cellular receiving devices is processed by different ones of at least two controllers (102, 202).

12. Method according to any one of the preceding method-based claims, wherein the analog load data signal (105-1, 105-2, 205-1, 205-2) that is based on the broadcast load data (BCLD) and the analog load data signal (105-1, 105-2, 205-1, 205-2) that is based on the cellular load data (CELD) are transmitted via the at least one common antenna (106-1, 106-2, 206-1).

13. Method according to any one of the preceding method-based claims, wherein the analog load data signal (105-1, 105-2, 205-1, 205-2) that is based on the broadcast load data (BCLD) and the analog load data signal (105-1, 105-2, 205-1, 205-2) that is based on the cellular load data (CELD) are transmitted via at least two different ones of the antennas (106-1, 106-2, 206-1), especially wherein at least one of the antennas (106-1, 106-2, 206-1) transmits the analog load data signal (105-1, 105-2, 205-1, 205-2) that is based on the broadcast load data (BCLD) and the load data signal that is based on the cellular load data (CELD).

14. Method according to any one of the preceding method-based claims, comprising configuring at least one configurable antenna characteristic of the at least one antenna (106-1, 106-2, 206-1), especially a configurable steering angle; and/or
wherein signals are at least one of emitted and received by the at least one antenna (106-1, 106-2, 206-1) in at least one of an operation frequency range of the broadcast networks (BCN) and an operation frequency range of the cellular networks (CEN), especially wherein the operation frequency range of the broadcast networks (BCN) comprises at least one of 54 MHz to 88 MHz, and 76 MHz to 108 MHz, and 174 MHz to 216 MHz, and 806 MHz to 6000 MHz; and wherein the operation frequency range of the cellular networks (CEN) comprises 806 MHz to 6000 MHz.

15. Method according to any one of the preceding method-based claims, comprising receiving at least one of control data for controlling the base station (100, 200) and metadata regarding the respective load data from at least one of a core network of the at least one broadcast network (BCN) and a core network of the at least one cellular network (CEN); and/or
comprising encrypting the broadcast load data (BCLD) and the cellular load data (CELD), especially with at least one of the same type of encryption, the same strength of encryption, and the same encryption parameters.
